# EUROPEAN PATENT APPLICATION

(11) **EP 3 564 505 A1**
(43) Date of publication of application: **06.11.2019**
(21) Application number: 16925796.1
(22) Date of filing: 27.12.2016
(51) Int. Cl.: F02B 37/18

(54) **WASTE GATE VALVE**

(71) Applicant: Nittan Valve Co., Ltd., Hadano-shi, Kanagawa 257-0031 (JP)
(72) Inventor: ENDO Shigeru, Hadano-shi Kanagawa 257-0031 (JP)
(74) Representative: Behr, Wolfgang
(86) International application number: PCT/JP2016/088940
(87) International publication number: WO 2018/122975

(57) **Abstract**

A wastegate valve 6 includes a valve 7, an arm member 8, and a stopper 9. The valve has a valve shaft 71 and a valve body 72. The arm member has a support 82 provided with a mounting hole 82a into which the valve shaft 71 is inserted and an arm shaft 81 and an actuator 83 which move the support 82. The stopper 9 protrudes in a direction orthogonal to an axis line of the valve shaft 71 and is provided in a distal portion of the valve shaft, which projects from the mounting hole 82a. The support 82 is provided with an inclined portion AI in an outer peripheral part of the mounting hole 82a thereof on a side of the stopper 9, the inclined portion being inclined with respect to the orthogonal direction of the axis line of the valve shaft 71. The stopper 9 is provided with an inclined portion SI that is inclined with respect to the orthogonal direction of the axis line of the valve shaft 71 and comes into contact with the inclined portion AI and the support 82 when the support 82 is moved in a direction of being separated from a bypass passage 40.

## Description

### Technical Field

The present invention relates to a wastegate valve that is used in an engine of an automobile.

### Background Art

In an engine of an automobile, a turbocharger that pressurizes intake air by using exhaust energy is used. The turbocharger is provided with a bypass passage for adjusting boost pressure, and the bypass passage is opened and closed by a wastegate valve.

The wastegate valve includes a valve that closes the bypass passage and an arm member that drives the valve. The arm member is provided with a mounting hole, and a valve shaft of the valve is inserted into the mounting hole. A stopper is fixed to a portion of the valve shaft, the portion projecting from the mounting hole. When the bypass passage is opened, the arm member is driven to come into contact with the stopper, and the stopper and the valve are moved in a direction of being separated from the bypass passage . The valve is separated from the bypass passage, and thereby a part of exhaust that is introduced to a turbine of the turbocharger flows into the bypass passage. In this manner, a rotation speed of the turbine is reduced, and a rotation speed of a compressor is also simultaneously reduced such that the boost pressure is adjusted.

### Citation List

### Patent Document

Patent Document 1: JP-A-2015-197068
Patent Document 2: JP-T-2015-500955

### Summary of the Invention

### Technical Problem

In a state where the bypass passage is closed, an arm member is disposed to have a predetermined gap between a valve and a stopper. Also in a case where there is a manufacturing error or a case where foreign matter is pinched between a valve body and the bypass passage, a gap between the arm member and the valve enables the valve to be inclined so as to close the bypass passage.

However, when a gap is provided between the arm member and the valve, exhaust pulsation occurs depending on the number of cylinders during exhaust of the engine, and thus the valve and the stopper fixed to the valve oscillate when the bypass passage is opened. The valve and the stopper collide with the arm member due to oscillation, and chattering occurs. A large runout width of oscillation results in an increase in collision sound, and thus there is a possibility that the chattering will result in noise.

In order to prevent the oscillation, installing of a spring stopper between a stopper and an arm member is proposed (for example, see Patent Document 1). Otherwise, interposing of a disc spring between a stopper and an arm member is proposed (for example, see Patent Document 2). However, the number of parts increases, and thus a problem arises in that manufacturing costs increase.

In order to solve the above-mentioned problem, an object of the invention is that a runout width of oscillation is reduced without an increase in number of parts such that noise is prevented.

### Solution to Problem

In order to achieve the above-described object, a wastegate valve of the invention includes: a valve that has a valve shaft and a valve body which is connected to a proximal end of the valve shaft and closes a bypass passage through which combustion gas emitted from an engine body passes; an arm member that has a support provided with a mounting hole, into which the valve shaft is inserted via a gap, and an actuator which moves the support in a direction of approaching or being separated from the bypass passage; and a stopper that is provided in a distal portion of the valve shaft, which projects from the mounting hole, and protrudes in an orthogonal direction of an axis line of the valve shaft. The support is provided with a first inclined portion in an outer peripheral part of the mounting hole thereof on a side of the stopper, the first inclined portion being inclined with respect to the orthogonal direction. The stopper is provided with a second inclined portion that is inclined with respect to the orthogonal direction and comes into contact with the first inclined portion and the support when the support is moved in a direction of being separated from the bypass passage.

### Advantageous Effects of the Invention

According to the invention, a support is provided with a first inclined portion, and a stopper is provided with a second inclined portion that comes into contact with the first inclined portion and the support during opening of a bypass passage. In this manner, it is possible to decrease an outer diameter of the stopper while a contact area necessary for supporting of the stopper is maintained when the bypass passage is opened. As a result, it is possible to reduce a runout width of oscillation of the stopper and a valve when the bypass passage is opened. Consequently, an occurrence of noise due to chattering is prevented without a need of an additional part. In addition, since it is possible to decrease a diameter of the stopper, it is also possible to decrease material costs, and it is possible to provide a wastegate valve having good economic efficiency. In addition, it is possible to improve amenity of an engine using the wastegate valve of the invention.

### Brief Description of the Drawings

Fig. 1 is a schematic diagram illustrating an overall configuration of an engine including a turbocharger.
Fig. 2(a) is a plan view illustrating a configuration of a wastegate valve according to a first embodiment of the invention, and Fig. 2(b) is a side view when viewed from a direction represented by arrow I in Fig. 2(a).
Fig. 3 is a cross-sectional view taken along line II-II in Fig. 2(a).
Fig. 4(a) is a plan view illustrating an operation of the wastegate valve during opening of a bypass passage, and Fig. 4(b) is a side view when viewed from a direction represented by arrow III in Fig. 4(a).
Fig. 5 is a cross-sectional view taken along line IV-IV in Fig. 4(a).
Fig. 6 is a cross-sectional view illustrating an operation of the wastegate valve according to the first embodiment of the invention.
Fig. 7(a) is a cross-sectional view illustrating a configuration of a wastegate valve of a comparative example, and Fig. 7(b) is a cross-sectional view illustrating an operation of the wastegate valve of the comparative example.
Fig. 8 is a partially enlarged cross-sectional view illustrating a configuration of a wastegate valve according to a second embodiment of the invention.
Fig. 9 is a cross-sectional view illustrating an operation of the wastegate valve according to the second embodiment of the invention.
Fig. 10 is a cross-sectional view illustrating a mode of oscillation in a case where an enlarged diameter portion C is not provided.
Fig. 11 is a cross-sectional view illustrating a configuration of a wastegate valve according to another embodiment.
Fig. 12 is a cross-sectional view illustrating a configuration of a wastegate valve according to still another embodiment.

### Mode for Carrying Out the Invention

Hereinafter, embodiments of the invention will be specifically described with reference to the drawings.

### 1. First Embodiment

### The first embodiment of the invention is described. 1-1. Overall Configuration of Engine

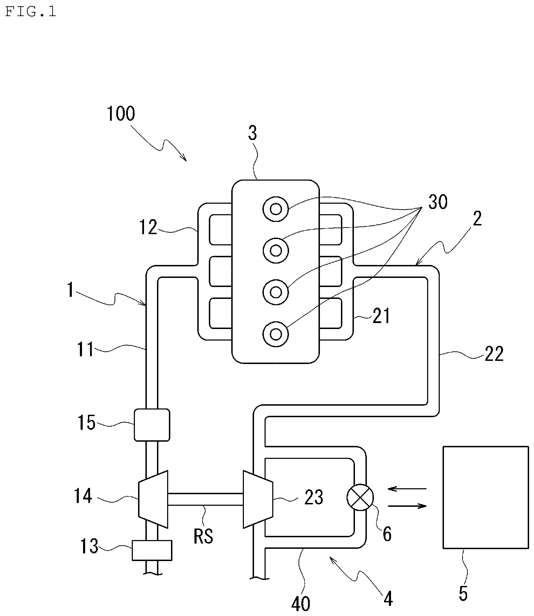

Fig. 1 illustrates an overall configuration of an engine 100 including a turbocharger 4. Here, as an example, a configuration of a four-cylinder engine is illustrated. The engine 100 includes an intake passage 1, an exhaust passage 2, an engine body 3, a turbocharger 4, and an engine control unit (ECU) 5 as a controller.

The intake passage 1 is a route, via which air is supplied to the engine body 3, and includes an intake pipe 11, in which air is suctioned from the outside and is pressurized, and an intake manifold 12 which is connected to the intake pipe. The intake manifold 12 diverges into four parts so as to be connected to four cylinders 30 of the engine body 3, and the air suctioned from the intake pipe 11 is supplied to the respective cylinders 30. On the intake pipe 11, an air cleaner 13, a compressor 14, and an intercooler 15 are mounted in this order from the outside toward the engine body 3.

The air cleaner 13 removes foreign matter such as dirt or dust contained in the suctioned air. The compressor 14 pressurizes the air such that the air has a pressure equal to or higher than atmospheric pressure so as to enhance combustion efficiency in the engine body 3. The intercooler 15 cools the air pressurized to have an increase in temperature in the compressor 14.

The engine body 3 includes a cylinder block and a cylinder head, which form a combustion chamber, and a fuel injecting device; however, description of detailed configurations and illustration thereof are omitted. The fuel injected by the fuel injecting device is mixed with the air in the combustion chamber, is ignited by a spark plug, and is combusted. Gas generated after combustion is emitted to the exhaust passage 2.

The exhaust passage 2 is a route, via which the combustion gas emitted from the engine body 3 is emitted to the outside, and includes an exhaust manifold 21, which is connected to the respective four cylinders 30 and combines the emitted combustion gas, and an exhaust pipe 22 which is connected to the exhaust manifold 21. On the exhaust pipe 22, a turbine 23 is mounted. The turbine 23 is coupled to the compressor 14 by a rotary shaft RS, the compressor being mounted on the intake passage 1. A bypass passage 40 is connected to the exhaust passage 2 so as to bypass the turbine 23. An inlet of the bypass passage 40 is connected to the exhaust passage on an upstream side of the turbine 23, and an outlet thereof is connected thereto on a downstream side of the turbine 23. On the bypass passage 40, a wastegate valve 6 that opens and closes the bypass passage 40 is mounted. The turbine 23, the compressor 14, the bypass passage 40, and the wastegate valve 6 configure the turbocharger 4.

When the turbine 23 is rotated with the combustion gas emitted from the engine body 3, the compressor 14 coupled to the turbine by the rotary shaft RS is also rotated to compress intake air. That is, the compressor 14 compresses the intake air with energy of the combustion gas to be emitted. Pressure of intake that is compressed by the compressor 14 and is sent to the engine body 3 is referred to as boost pressure; however, when the boost pressure is too much increased, there is a possibility that knocking will occur and result in damage to the engine 100. Therefore, a boost sensor (not illustrated) is mounted on a downstream side of the compressor 14 of the intake passage 1. The wastegate valve 6 is operated in response to pressure, which is detected by the boost sensor, and opens and closes the bypass passage 40. When the wastegate valve 6 is opened, a part of combustion gas flows into the bypass passage 40 and, thus, is emitted to the outside without passing through the turbine 23. In this manner, the bypass passage 40 is opened and closed, and thereby an amount of combustion gas that passes through the turbine 23 is controlled, and the boost pressure is adjusted.

The ECU 5 is a microcomputer that is configured of an I/O interface, a CPU, an RAM, an ROM, or the like. The ECU 5 controls operations of units of the engine 100; however, as an example, opening and closing operations of the wastegate valve 6 is controlled based on pressure that is detected by the boost sensor.

### 1-2. Configuration of Wastegate Valve

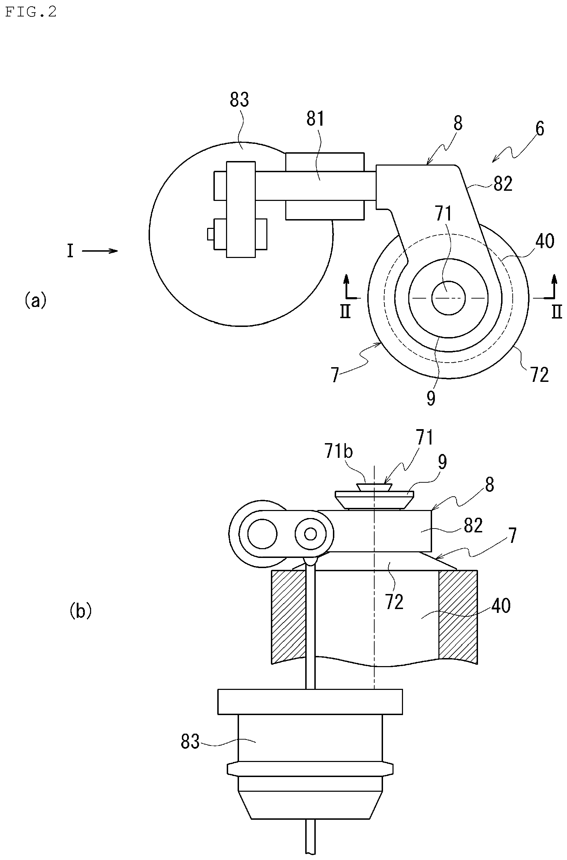

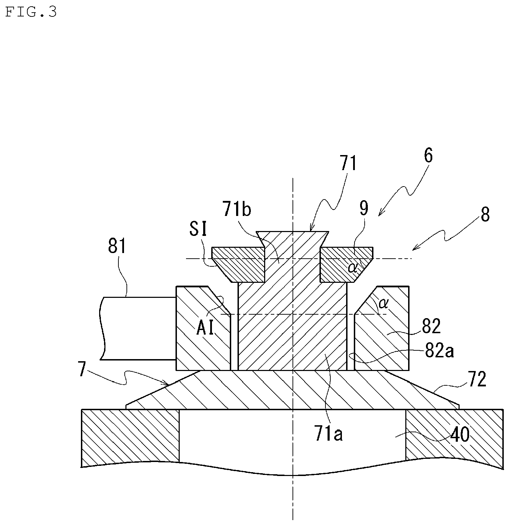

Figs. 2 and 3 illustrate a configuration of the wastegate valve 6 of the embodiment. Fig. 2(a) is a plan view illustrating a configuration of the wastegate valve 6. Fig. 2(b) is a side view when viewed from a direction represented by arrow I in Fig. 2(a). Incidentally, to make the drawing easy to understand, only the bypass passage 40 is illustrated in a cross-section in Fig. 2(b). Fig. 3 is a cross-sectional view taken along line II-II in Fig. 2(a).

The wastegate valve 6 is disposed at an outlet of piping that configures the bypass passage 40. The wastegate valve 6 includes a valve 7 that opens and closes the bypass passage 40, an arm member 8 that moves the valve 7 in a direction of approaching or being separated from the bypass passage 40, and a stopper 9 that is connected to the valve 7. Incidentally, Figs. 2 and 3 illustrate a state in which the valve 7 closes the outlet of the bypass passage 40. Hereinafter, a direction in which the wastegate valve 6 approaches the bypass passage 40 is referred to as a downward direction, and a direction in which the wastegate valve is separated from the bypass passage 40 is referred to as an upward direction.

The valve 7 includes a column-shaped valve shaft 71 and a valve body 72 that is fixed to the valve shaft 71 and closes the bypass passage 40. The valve shaft 71 is configured of a large diameter part 71a which is a proximal part and a small diameter part 71b which is a distal part. The small diameter part 71b has a shape formed by connecting a truncated cone to a column having a diameter equal to that of a small diameter surface of the truncated cone. The large diameter part 71a is a column having a diameter larger than that of the column of the small diameter part 71b. The large diameter part 71a and the small diameter part 71b are coaxially disposed, and an end surface of the column of the small diameter part 71b is fixed to one end surface of the large diameter part 71a. The valve body 72 is fixed to an end surface on an opposite side of the end surface of the large diameter part 71a to which the small diameter part 71b is fixed. The large diameter part 71a is disposed on a lower side, and the small diameter part 71b is disposed on an upper side. That is, a distal end of the valve shaft 71 is a top surface of the small diameter part 71b, and a proximal end of the valve shaft 71 is a bottom surface of the large diameter part 71a.

The valve body 72 is an umbrella-shaped member, that is, a truncated cone having a diameter enlarged downward, and is provided with a recessed portion (not illustrated) in a bottom surface thereof. A top surface of the valve body 72 is coaxially fixed to the proximal end of the valve shaft 71, that is, the bottom surface of the large diameter part 71a. A diameter of the top surface of the valve body 72 is larger than a diameter of a mounting hole 82. A diameter of the bottom surface of the valve body 72 is larger than that of the outlet of the bypass passage 40 and is to be able to airtightly cover the outlet.

The arm member 8 has a support 82 that supports the valve 7, an actuator 83 that drives the support 82, and a shaft 81 that connects the support 82 to the actuator 83. A distal part of the support 82 has a column shape, and the distal part is provided with the mounting hole 82a. In a state illustrated in Figs. 2 and 3, the support 82 is in contact with the valve body 72 that closes the bypass passage 40. The mounting hole 82a of the support 82 is provided to penetrate the column-shaped distal part in an axial direction from a top surface to a bottom surface thereof. A diameter of the mounting hole 82a on a wall surface is larger than the diameter of the large diameter part 71a of the valve shaft 71 and is smaller than the diameter of the top surface of the valve body 72. The large diameter part 71a of the valve shaft 71 is inserted into the mounting hole 82a via a gap. The actuator 83 moves the shaft 81 and the support 82 connected to the shaft 81, in an up-down direction, that is, a direction of approaching or being separated from the bypass passage 40.

A ring-shaped stopper 9 is provided on a distal portion of the valve shaft 71, the distal portion projecting from the mounting hole 82a. Specifically, the stopper 9 is fixed to an outer periphery of the column of the small diameter part 71b of the valve shaft 71. In the embodiment, for convenience, the stopper 9 and the valve 7 are described as separate bodies; however, the stopper 9 and the valve 7 can be integrally formed by a forging method or the like. In a case of integral forging, a column portion of the small diameter part 71b of the valve shaft 71 and the stopper 9 are integrally formed. Incidentally, it is also possible to separately manufacture the stopper 9 and the valve 7 so as to fix both by using an adhesive, a fixing tool, or the like.

An outer periphery of the stopper 9 has a diameter larger than the diameter of the large diameter part 71a, and an outer peripheral portion thereof protrudes toward the outside of the large diameter part 71a. The protruding portion is extended in a direction orthogonal to an axis line (dot-and-dash line in Fig. 3) of the valve shaft 71 and is opposite to the support 82 of the arm part 8 via a gap.

As illustrated in Fig. 3, the stopper 9 is provided with an inclined portion SI on an outer peripheral part thereof. The inclined portion SI has a conical surface that is inclined into a linear shape with respect to a direction in which the stopper 9 protrudes, that is, an orthogonal direction (two-dot chain line in Fig. 3) of the axis line of the valve shaft 71. In other words, the inclined portion SI has a shape formed by reducing a diameter of the stopper 9 on the outer periphery into a tapered shape from a distal side toward a proximal side of the valve shaft 71. A surface of the inclined portion SI is a knurled surface subjected to knurling or a stepped surface subjected to a step-forming process.

The support 82 is provided with an inclined portion AI on an outer peripheral part of the mounting hole 82a on a side of the stopper 9. The inclined portion AI is positioned below the inclined portion SI. Similarly to the inclined portion SI, the inclined portion AI has a conical surface that is inclined into a linear shape with respect to the orthogonal direction (two-dot chain line in Fig. 3) of the axis line of the valve shaft 71. In other words, the inclined portion AI has a shape formed by enlarging a diameter of the mounting hole 82a on the wall surface from a side of the valve body 72 toward the side of the stopper 9. In a state in which the valve 7 closes the outlet of the bypass passage 40, the inclined portion SI and the inclined portion AI are opposite to each other via a gap. A surface of the inclined portion AI is a knurled surface subjected to knurling or a stepped surface subjected to a step-forming process.

The inclined portion SI and the inclined portion AI have the same inclination angle α with respect to the orthogonal direction of the axis line of the valve shaft 71. An outer diameter of the inclined portion SI is larger than an inner diameter of the inclined portion AI. In addition, at least a part of the inclined portion SI and at least a part of the inclined portion AI both are disposed at positions that overlap each other when viewed from the distal side of the valve shaft 71; however, sizes of the inclined portion SI and the inclined portion AI are not limited to respective specific sizes. For example, the outer diameter of the inclined portion SI may be smaller than an outer diameter of the inclined portion AI. In this case, when viewed from the distal side of the valve shaft 71, the entire inclined portion SI falls in a mortar-shaped region formed by the inclined portion AI. In addition, the outer diameter of the inclined portion SI may be larger than the outer diameter of the inclined portion AI, for example. In this case, when viewed from the distal side of the valve shaft 71, the inclined portion AI is completely covered by the stopper 9.

### 1-3. Operation

Operations of the engine 100 and the turbocharger 4 are briefly described, and the detailed description thereof is omitted. Here, an operation of the wastegate valve 6 of the embodiment is described.

As illustrated in Figs. 2 and 3, in a state in which the wastegate valve 6 is closed, the valve body 72 of the valve 7 closes the outlet of the bypass passage 40. In addition, the arm member 8 comes into a state of being opposite to the valve shaft 71 of the valve 7 and the stopper 9 via a predetermined gap and is not in contact with the valve shaft and the stopper. In order for the valve body 72 to close the bypass passage 40, the support 82 and the valve body 72 come into a state of being brought into contact with each other.

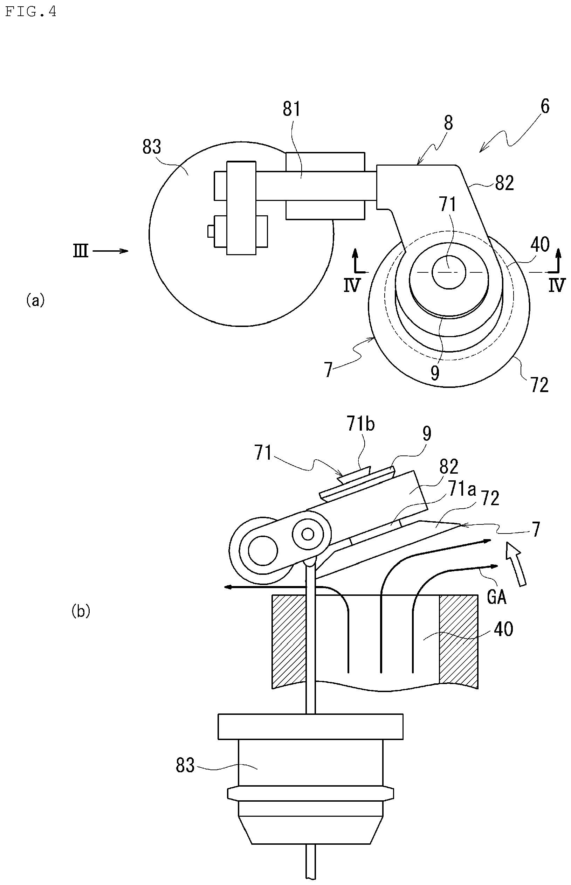

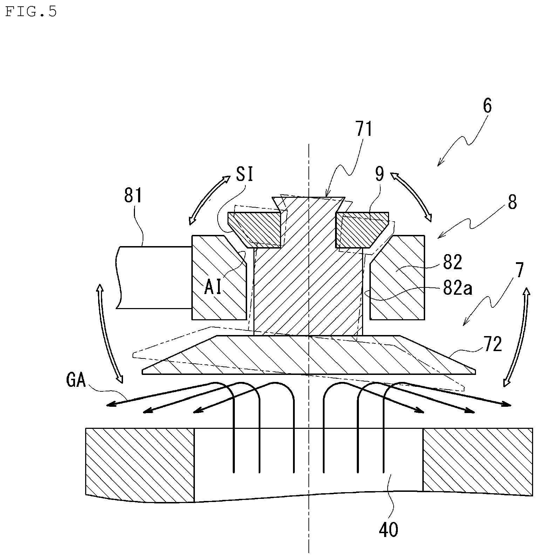

Figs. 4 and 5 illustrate an operation of the wastegate valve 6 during opening of the bypass passage 40. Fig. 4(a) is a plan view of the wastegate valve 6. Fig. 4(b) is a side view when viewed from a direction represented by arrow III in Fig. 4(a). Fig. 5 is a cross-sectional view taken along line IV-IV in Fig. 4(a).

When the wastegate valve 6 is opened, the arm member 8 is driven by the actuator and is moved in a direction of being separated from the bypass passage 40, that is, an upward direction. The movement in the upward direction causes the support 82 to be separated from the valve body 72 and come into contact with the stopper 9. As described above, the inclined portion AI is positioned below the inclined portion SI, and the inclined portion SI and the inclined portion AI have the same inclination angle α (refer to Fig. 3). Hence, the inclined portion AI of the support 82 comes into contact with and supports the first inclined portion SI of the stopper 9. While the inclined portion AI supports the inclined portion SI, the arm member 8 continues to be moved in the upward direction, and thereby the stopper 9 and the valve 7 fixed to the stopper 9 are also moved in the upward direction. Consequently, the valve body 72 of the valve 7 having closed the bypass passage 40 is separated from the outlet of the bypass passage 40, and the bypass passage 40 is opened, as illustrated in Fig. 4(b).

When the wastegate valve 6 is closed, the arm member 8 is moved in a direction of approaching the bypass passage 40, that is, a downward direction. The valve 7 supported by the arm member 8 is also moved in the downward direction, and the valve body 72 is seated on the outlet of the bypass passage 40 so as to close the bypass passage 40. Seating of the valve body 72 stops the valve 7 and the stopper 9 from being moved further. The arm member 8 further moves in the downward direction. The arm member 8 stops at a position at which the support 82 comes into contact with the valve body 72 and is separated from the stopper 9 by the predetermined gap.

Combustion gas GA flowing into the bypass passage 40 from the engine body 3 is emitted from the outlet of the bypass passage 40. The emitted combustion gas GA is blown toward the valve 7, which is positioned above the outlet, and further flows in a radial direction of the valve.

As mentioned above, the valve 7 is not fixed to the arm member 8 but is only supported by a top surface of the support 82 via the stopper 9. In this manner, a gap is provided between the valve shaft 71 of the valve 7 and the mounting hole 82a. Therefore, as illustrated in Fig. 5, the valve 7 pushed by the blown combustion gas GA and the stopper 9 fixed to the valve 7 oscillate in the radial direction within the mounting hole 82a. The valve shaft of the valve 7 and the stopper 9 collide with the arm member 8 due to oscillation. While the combustion gas GA is blown, the oscillation and collision continually occur. The collision repeatedly occurs, and thereby so-called chattering occurs. When the oscillation increases, the number of occurrence of the collision also increases, and thus there is a high possibility that the chattering will result in noise.

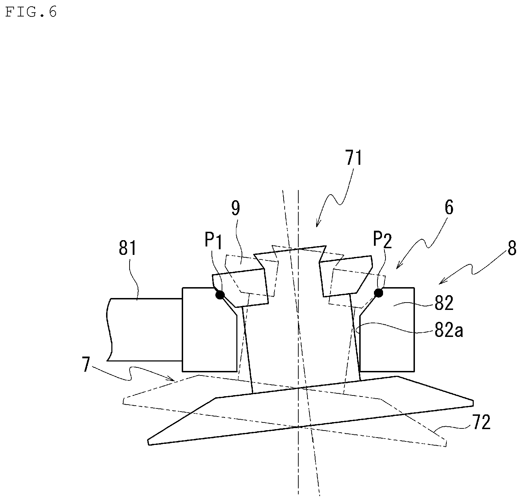

Fig. 6 schematically illustrates a runout width of oscillation of the stopper 9 during opening of the bypass passage 40. The stopper 9 comes into contact with the arm member 8 at one point P₁ and, then, oscillates to again come into contact with the arm member 8 at one point P₂ that is opposite to the first contact point P₁. That is, the runout width of the oscillation of the stopper 9 means a range from the one contact point P₁ to the other contact point P₂ of the arm member 8 with the stopper 9. In the embodiment, the inclined portion SI of the stopper 9 is disposed to fall in the mortar-shaped region formed by the inclined portion AI of the arm member 8, and thus the contact points P₁ and P₂ are positioned on surfaces of the inclined portion AI and the inclined portion SI.

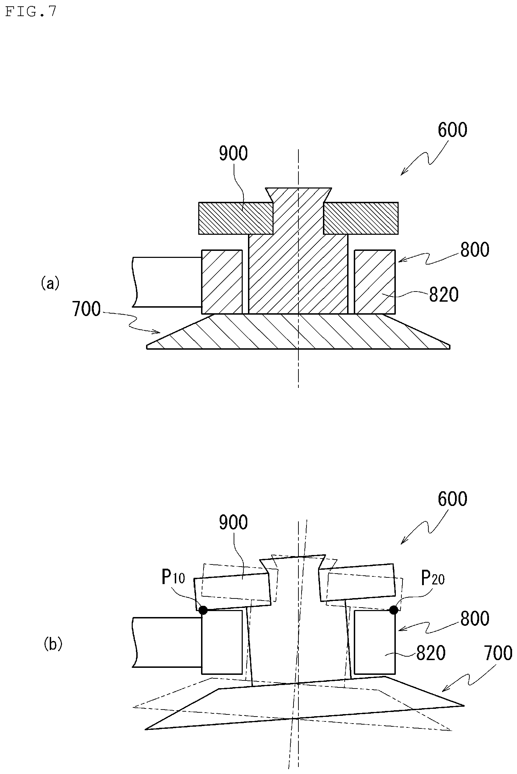

Here, Fig. 7(a) illustrates a wastegate valve 600 as a comparative example. In the wastegate valve 600 of the comparative example, an arm member 800 and a stopper 900 are not provided with the inclined portion AI and the inclined portion SI, respectively. Therefore, a protruding portion of a bottom surface of the stopper 900 and a top surface of a supporting part 820 of the arm member 800 are extended to be parallel to the orthogonal direction of the valve shaft. When the arm member 800 is lifted in the upward direction during the opening, the top surface of the supporting part 820 comes into contact with the bottom surface of a protrusion portion of the stopper 900 so as to support the stopper 900, and the stopper 900 and a valve 700 are moved in the upward direction. In the comparative example, in order to make an area, in which the arm member 800 and the stopper 900 come into contact with each other during the opening, equal to a contact area between the inclined portion AI and the inclined portion SI of the embodiment, it is necessary to increase an outer diameter of the stopper 900 more than that in the embodiment. In the embodiment, the outer diameter of the stopper 9 is smaller than a diameter of the supporting part 820; however, in the comparative example, the outer diameter of the stopper 900 is equal to a diameter of the supporting part 820. The outer diameter of the stopper 900 is increased and thereby, as illustrated in Fig. 7(b), a runout width of oscillation of the stopper 900, that is, a width from a contact point P₁₀ to a contact point P₂₀ of the arm member 800 with the stopper 900, is increased more than in the embodiment.

That is, in the wastegate valve 6 of the embodiment, portions in which the arm member 8 and the stopper 9 come into contact with each other are the inclined portion AI and the inclined portion SI, and thereby it is possible to decrease the outer diameter of the stopper 9 while the area of a contact part is maintained. As a result, the runout width of oscillation is reduced. In addition, the inclined portion SI of the stopper 9 falls in the mortar-shaped region formed by the inclined portion AI of the arm member 8, and thus the stopper 9 is prevented from oscillating in a range of exceeding the inclined portion AI of the arm member 8. In addition, the inclined portion AI and the inclined portion SI have the same inclination angle α (refer to Fig. 3), and thus it is easy for the inclined portion AI and the inclined portion SI to come into surface contact with each other. Consequently, during the opening of the bypass passage 40, the arm member 8 reliably supports the stopper 9 and the valve 7. In addition, friction generated during the contact between the inclined portion AI and the inclined portion SI makes it also easy to limit the very oscillation of the valve 7 and the stopper 9. Further, in the embodiment, inclined surfaces of the inclined portion AI and the inclined portion SI are the knurled surface or the stepped surface. Therefore, contact friction between the inclined portion AI and the inclined portion SI further increases. Consequently, the oscillation of the valve 7 and the stopper 9 is further limited.

### 1-4. Effects

(1) As described above in detail, the wastegate valve 6 of the embodiment includes: the valve 7 that has the valve shaft 71 and the valve body 72 which is connected to the proximal end of the valve shaft 71 and closes the bypass passage 40 through which combustion gas emitted from the engine body 3 passes; the arm member 8 that has the support 82 provided with the mounting hole 82a, into which the valve shaft 71 is inserted via the gap, and the actuator 83 which moves the support 82 in the direction of approaching or being separated from the bypass passage 40; and the stopper 9 that is provided in the distal portion of the valve shaft 71, which projects from the mounting hole 82a, and protrudes in the orthogonal direction of the axis line of the valve shaft 71. The support 82 is provided with the inclined portion AI (first inclined portion) in the outer peripheral part of the mounting hole 82a thereof on the side of the stopper 9, the first inclined portion being inclined with respect to the orthogonal direction of the axis line of the valve shaft 71. The stopper 9 is provided with the inclined portion SI (second inclined portion) that is inclined with respect to the orthogonal direction of the axis line of the valve shaft 71 and comes into contact with the inclined portion AI and the support 82 when the support 82 is moved in the direction of being separated from the bypass passage 40. When the arm member 8 is moved in the direction of being separated from the bypass passage 40, the inclined portion AI comes into contact with the inclined portion SI, the stopper 9 is supported by the support 82 of the arm member 8 so as to be moved in the direction of being separated from the bypass passage 40, and the valve body 72 opens the bypass passage 40. Specifically, the inclined portion SI is formed by reducing the diameter of the stopper on the outer periphery thereof from the distal side toward the proximal side of the valve shaft 71, and the inclined portion AI is formed by enlarging the diameter of the mounting hole 82a on the wall surface thereof from the side of the valve body 72 toward the side of the stopper 9.
   The contact surfaces between the arm member 8 and the stopper 9 are on the inclined portion SI and the inclined portion AI, and thereby it is possible to decrease the outer diameter of the stopper 9 while the contact area for supporting the valve 7 is maintained. For example, the outer diameter of the stopper 9 may be smaller than the diameter of the support 82 of the arm member 8. The outer diameter of the stopper 9 is reduced, and thereby it is possible to reduce the runout width of oscillation of the stopper 9 and the valve 7 when the bypass passage 40 is opened. Consequently, an occurrence of noise due to chattering is prevented without a need of an additional part. In addition, since it is possible to decrease the diameter of the stopper 9, it is also possible to decrease material costs, and it is possible to provide the wastegate valve 6 having good economic efficiency. In addition, it is possible to improve amenity of the engine 100 using the wastegate valve 6 of the invention.
(2) The inclined portion SI and the inclined portion AI have the conical surfaces with the same inclination angle α with respect to the orthogonal direction of the axis line of the valve shaft 71. Consequently, it is easy for the inclined portion SI and the inclined portion AI to come into surface contact with each other during the opening of the bypass passage 40, and thus the arm member 8 reliably supports the stopper 9 and the valve 7. In addition, the friction generated during the contact between the inclined portion SI and the inclined portion AI makes it also easy to limit the very oscillation of the valve 7 and the stopper 9.
(3) At least a part of the inclined portion SI may be formed to fall in the region formed by the inclined portion AI, when viewed from the distal side of the valve shaft 71. Consequently, it is possible to prevent the stopper 9 from oscillating in the range of exceeding the inclined portion AI of the arm member 8 and prevent the runout width of oscillation from increasing.
(4) The inclined portion SI and the inclined portion AI have the knurled surface or the stepped surface. Therefore, a friction force generated during the contact between the inclined portion SI and the inclined portion AI further increases. Consequently, it is possible to further limit the oscillation of the valve 7 and the stopper 9.

### 2. Second Embodiment

The wastegate valve 6 of the second embodiment is described. Incidentally, only a difference from the above-mentioned embodiment is described, and the same reference signs are assigned to the same portions as those in the above-mentioned embodiment. Hence, the detailed description thereof is omitted.

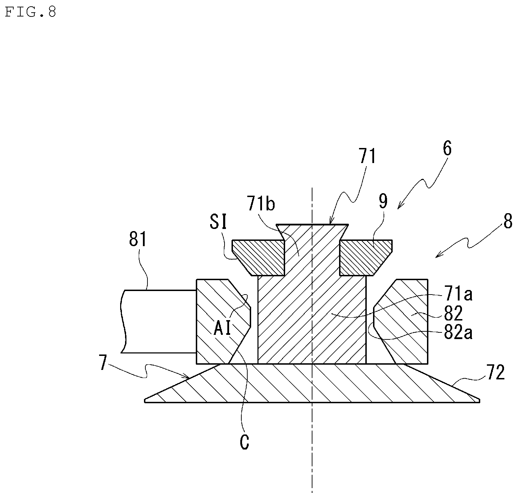

As illustrated in Fig. 8, in the wastegate valve 6 of the second embodiment, the support 82 of the arm member 8 is provided with an enlarged diameter portion C in an end portion of the mounting hole 82a on the side of the valve body 72, the enlarged diameter portion being formed by enlarging the diameter of the mounting hole 82a on the wall surface thereof. In other words, the enlarged diameter portion C is formed by continuously enlarging the diameter of the mounting hole 82a on its wall surface from the side of the stopper 9 toward the side of the valve body 72. The enlarged diameter portion C has a conical surface inclined into a linear shape in an opposite direction of the inclined portion AI. That is, the enlarged diameter portion C has a maximum diameter on a lower end thereof on the side of the bottom surface of the support 82 and a minimum diameter on an upper end on the distal side of the valve shaft 71.

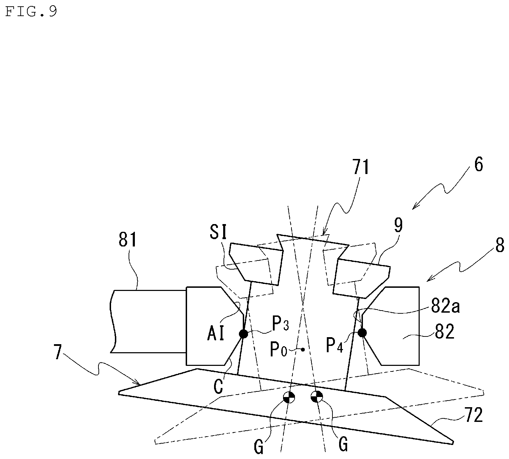

As described in the first embodiment, during the opening of the bypass passage 40, the valve 7 and the stopper 9 oscillate within the mounting hole 82a, and the valve shaft 71 of the valve 7 and the stopper 9 collide with the arm member 8. In the first embodiment, a mode of oscillation of the stopper 9 is described with reference to Fig. 6. On the other hand, as illustrated in Fig. 9, a contact point between the valve shaft 71 of the valve 7 and the mounting hole 82a oscillates in a range from one contact point P₃ between the valve shaft 71 and the support 82 of the arm member 8 to the other contact point P₄ opposite to the contact point P₃.

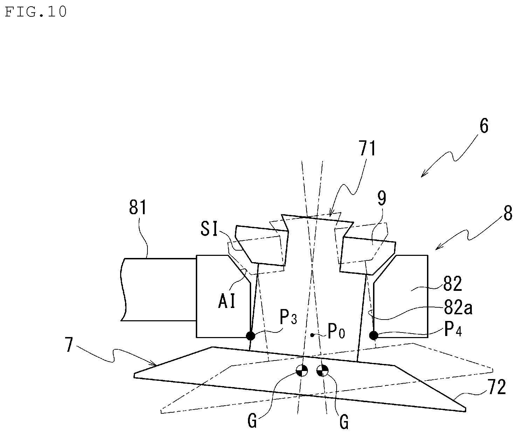

For comparison, Fig. 10 illustrates a mode of oscillation of the valve 7 in a case where the enlarged diameter portion C is not provided. In the case where the enlarged diameter portion C is not provided, the contact points P₃ and P₄ are positioned in lower portions of the arm member 8 and the valve shaft 71. A center point P₀ of the oscillation is an intermediate position between the contact points P₃ and P₄. Here, a gravity center G of the valve is positioned inside the valve body 72 on an axis center of the valve 7. In Fig. 10, the gravity center G of the valve is positioned to be close to the center point P₀ of the oscillation.

As back to Fig. 9, in the second embodiment, the enlarged diameter portion C is set in the lower portion of the arm member 8, and thereby the contact points P₃ and P₄ between the arm member 8 and the valve shaft 71 move further upward from the contact point P₃ than in a case where the enlarged diameter portion C is not provided. The contact points P₃ and P₄ move upward, and thereby the center point P₀ of the oscillation also moves upward and moves away from the gravity center G of the valve.

In light of a principle of lever, separation of the center point P₀ of the oscillation from the gravity center G of the valve means that a fulcrum and an action point are separated from each other by a distance. That is, energy required for the oscillation of the valve 7 increases, and the very oscillation is limited. In order to achieve a significant limiting effect, it is desirable that the contact points P₃ and P₄ are moved upward as much as possible. However, a portion of the wall surface of the mounting hole 82a except for the inclined portion AI and the enlarged diameter portion C, that is, the wall surface parallel to the axis line (dot-and-dash line in Fig. 8) of the valve shaft 71, needs to secure a certain length in order to support the stopper 9 and the valve 7. Hence, a length of the enlarged diameter portion C can be appropriately determined with consideration for a length required for the wall surface of the mounting hole 82a.

As stated above, in the wastegate valve 6 of the second embodiment, the arm member 8 is provided with the enlarged diameter portion C in the end portion of the mounting hole 82a on the side of the valve body 72, the enlarged diameter portion being formed by enlarging the diameter of the mounting hole 82a on the wall surface thereof. The center point P₀ of oscillation of the valve 7 is separated from the gravity center G of the valve due to the enlarged diameter portion C. It is possible to limit the very occurrence of the oscillation of the valve 7 due to the enlarged diameter portion C, in addition to a reduction of the runout width of the oscillation of the stopper 9 due to the inclined portion AI and the inclined portion SI. Consequently, it is possible to limit the occurrence of noise, and thus it is possible to provide the engine 100 having improved amenity.

### 3. Other Embodiments

As described above, the embodiments of the invention are described; however, the invention is not limited to the above-mentioned embodiments. In the practice of the invention, it is possible to perform omission, replacement, and modification within a range without departing from the gist of the invention.

For example, Fig. 1 illustrates the four-cylinder engine as a structure of the engine 100; however, the four-cylinder engine is only provided as an example, and it is also possible to apply the wastegate valve 6 of the invention to an engine having another structure such as a six-cylinder engine, for example.

In the first embodiment, an example in which both the inclined portion AI and the inclined portion SI have the knurled surface or the stepped surface is described; however, only one inclined portion may have the knurled surface or the stepped surface. Also in this case, the contact friction can increase, and it is possible to limit the oscillation of the valve 7.

In the first embodiment, the inclined portion AI and the inclined portion SI have the same inclination angle α, and thereby it is easy for the inclined portion AI and the inclined portion SI to come into surface contact with each other during the opening of the bypass passage 40; however, the invention is not limited thereto. Any inclination angle may be employed as long as it is possible to secure a contact area necessary for the arm member 8 to support the stopper 9 during the opening of the bypass passage 40, or different inclination angles α may be employed.

In the second embodiment, in the wastegate valve 6 in which the inclined portion AI and the inclined portion SI described in the first embodiment are formed, the enlarged diameter portion C is further formed; however, the invention is not limited thereto. For example, in the wastegate valve 6 in which the inclined portion AI and the inclined portion SI are not provided, only the enlarged diameter portion C may be formed. Also in this case, it is possible to limit the oscillation by separating the center point P₀ of the oscillation from the gravity center G of the valve.

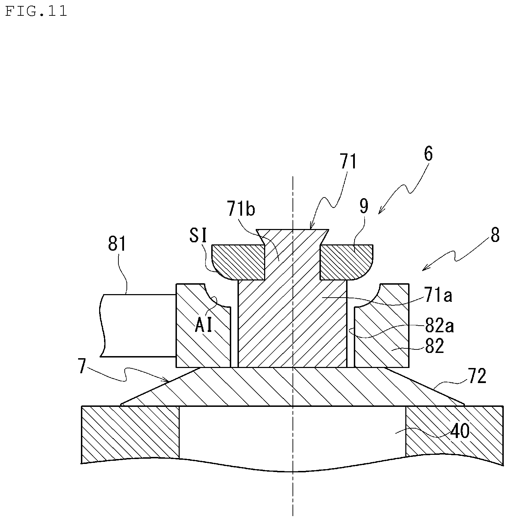

In the first embodiment, an example in which the inclined portion AI and the inclined portion SI have the linear inclined surface is described; however, the inclined portion AI and the inclined portion SI may be inclined with respect to the orthogonal direction of the axis line of the valve shaft, and the surface of the inclined portions is not limited to the linear inclined surface. For example, as illustrated in Fig. 11, the inclined portion AI and the inclined portion SI may have a curved inclined surface. In this case, the inclined portion SI may have a convex surface, and the inclined portion AI may have a concave surface into which the convex surface is fitted such that it is easy for the inclined portion AI and the inclined portion SI to come into surface contact, for example. It is needless to say that the inclined portion AI may have the convex surface, and the inclined portion SI may have the concave surface.

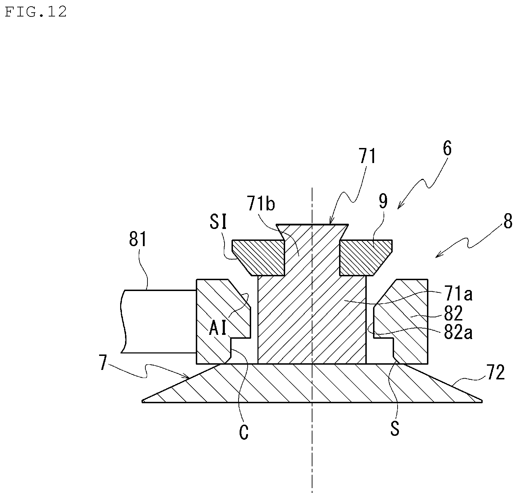

In the second embodiment, an example in which the enlarged diameter portion C has the linear inclined surface formed by continuously enlarging the diameter from the side of the stopper 9 toward the side of the valve body 72; however, the invention is not limited thereto. The enlarged diameter portion C may be formed by enlarging a diameter of the end portion of the mounting hole 82a on the side of the valve body 72. Hence, the enlarged diameter portion does not have the linear inclined surface but may have the curved inclined surface. In addition, as illustrated in Fig. 12, the enlarged diameter portion C may be formed by enlarging the diameter of the mounting hole 82a to a maximum diameter in one step. In this case, the enlarged diameter portion C has a surface parallel to the axis line (dot-and-dash line) of the valve shaft 71. Incidentally, as illustrated in Fig. 12, an outer edge of the enlarged diameter portion C may be subjected to chamfering, thereby, being provided with a chamfered portion S. Although not illustrated, an outer edge of the enlarged diameter portion C illustrated in Fig. 8 may also be subjected to chamfering, thereby, being provided with the chamfered portion S.

### Reference Signs List

- 100: Engine
- 1: Intake passage
- 2: Exhaust passage
- 3: Engine body
- 4: Turbocharger
- 5: ECU
- 6: Wastegate valve
- 7: Valve
- 8: Arm member
- 9: Stopper
- 11: Intake pipe
- 12: Intake manifold
- 13: Air cleaner
- 14: Compressor
- 15: Intercooler
- 21: Exhaust manifold
- 22: Exhaust pipe
- 23: Turbine
- 30: Cylinder
- 40: Bypass passage
- 71: Valve shaft
- 71a: Large diameter part
- 71b: Small diameter part
- 72: Valve body
- 81: Shaft
- 82: Arm support
- 82a: Mounting hole
- 83: Actuator
- 600: Wastegate valve
- 800: Arm member
- 820: Supporting part
- 900: Stopper
- RS: Rotary shaft
- GA: Combustion gas
- AI, SI: Inclined portion
- C: Enlarged diameter portion
- S: Chamfered portion

## Claims

1. A wastegate valve **characterized by** comprising:
a valve that has a valve shaft and a valve body which is connected to a proximal end of the valve shaft and closes a bypass passage through which combustion gas emitted from an engine body passes;
an arm member that has a support provided with a mounting hole, into which the valve shaft is inserted via a gap, and an actuator which moves the support in a direction of approaching or being separated from the bypass passage; and
a stopper that is provided in a distal portion of the valve shaft, which projects from the mounting hole, and protrudes in an orthogonal direction of an axis line of the valve shaft,
wherein the support is provided with a first inclined portion in an outer peripheral part of the mounting hole thereof on a side of the stopper, the first inclined portion being inclined with respect to the orthogonal direction, and
wherein the stopper is provided with a second inclined portion that is inclined with respect to the orthogonal direction and comes into contact with the first inclined portion and the support when the support is moved in a direction of being separated from the bypass passage.

2. The wastegate valve according to claim 1, **characterized in that** the first inclined portion is formed by enlarging a diameter of the mounting hole on a wall surface from a side of the valve body toward the side of the stopper, and the second inclined portion is formed by reducing a diameter of the stopper on an outer periphery from a distal side toward a proximal side of the valve shaft.

3. The wastegate valve according to claim 2, **characterized in that** the first inclined portion and the second inclined portion have respective conical surfaces at the same inclined angle with respect to the orthogonal direction.

4. The wastegate valve according to claim 2, **characterized in that** one of the first inclined portion and the second inclined portion has a curved convex surface, and the other thereof has a curved concave surface into which the curved convex surface is fitted.

5. The wastegate valve according to any one of claims 1 to 4, **characterized in that** at least a part of the second inclined portion falls in a region formed by the first inclined portion, when viewed from a distal side of the valve shaft.

6. The wastegate valve according to any one of claims 1 to 5, **characterized in that** one or both of the first inclined portion and the second inclined portion have a knurled surface or a stepped surface.

7. The wastegate valve according to any one of claims 1 to 6, **characterized in that** the support is provided with an enlarged diameter portion in an end portion on the side of the valve body, the enlarged diameter portion being formed by enlarging a diameter of the mounting hole on the wall surface thereof.

8. The wastegate valve according to claim 7, **characterized in that** the enlarged diameter portion is formed by continuously enlarging the diameter of the mounting hole on the wall surface from the side of the stopper toward the side of the valve body.
